# EUROPEAN PATENT SPECIFICATION

(11) **EP 0 816 215 B1**
(45) Date of publication and mention of the grant of the patent: **09.10.2002**
(21) Application number: 97111180.2
(22) Date of filing: 03.07.1997
(51) Int. Cl.: B62M 23/02

(54) **Electric motor-assisted bicycle**
Fahrrad mit elektrischem Hilfsmotor
Bicyclette à assistance électrique

(30) Priority: 03.07.1996 JP 17378996; 04.07.1996 JP 17494596; 04.07.1996 JP 17494496; 05.07.1996 JP 17622996
(43) Date of publication of application: 07.01.1998
(73) Proprietor: YAMAHA HATSUDOKI KABUSHIKI KAISHA, Iwata-shi Shizuoka-ken, 438 (JP)
(72) Inventor: Nakayama, Hironori, Iwata-shi, Shizuoka-ken (JP)
(74) Representative: Grünecker, Kinkeldey, Stockmair & Schwanhäusser Anwaltssozietät

(56) References cited:
- EP-A- 0 590 674
- EP-A- 0 636 538

## Description

This invention relates to an electric motor-assisted bicycle comprising a power unit for outputting a pedal force inputted to a crankshaft and/or an auxiliary force from an electric motor, a pedal force sensor means for detecting said pedal force, and a control unit for variably controlling the auxiliary force from said electric motor according to the pedal force detected by the pedal force sensor means.

The electric motor-assisted bicycle in which the resultant of the pedal force inputted to a pedal and the auxiliary driving force from an electric motor is supplied to a wheel, is a conventional bicycle (see EP-A-636538).

This electric motor-assisted bicycle is provided with a power unit for outputting the resultant of the pedal force and the auxiliary driving force from an electric motor, a pedal force detection device for detecting the pedal force, and a control unit for variably controlling the output of the electric motor according to the detected pedal force.

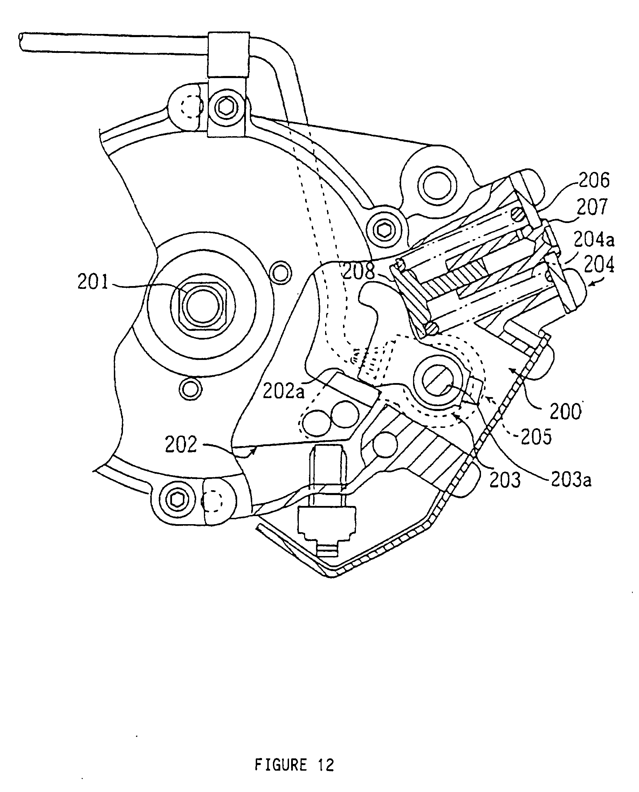

For such a pedal force detection device, a system shown in Fig. 12 has been employed in which a reaction force receiving section and an angle detection section are combined in one body. That is, the pedal force detection device 200 is comprised of a torque plate 202 adapted to rotate anticlockwise in the figure according to the magnitude of the pedal force acting on a crankshaft 201, a rotary lever 203 as an angle detection section shaft-mounted for engagement with a contact section 202a of the torque plate 202, and a reaction force receiving section 204 for biasing the rotary lever 203 anticlockwise, the rotation angle of a rotary shaft 203a fixed to said rotary lever 203 being detected by a potentiometer 205. The reaction force receiving section 204 is arranged such that a spring 204a is interposed between a cylinder 207 fixed to a support plate 206 and a piston 208 inserted in the cylinder 207 for sliding movement.

However, in the above-described structure of the conventional pedal force detection device, because of both the pedal force from the torque plate 202 and the reaction force from the spring 204a acting on the rotary shaft 203a for inputting the rotation angle to the potentiometer 205, it is necessary for the rotary shaft 203a to have a large diameter and to be supported by a large bearing so as to withstand the forces, posing a problem of increased costs as well as increased parts weight.

In addition, the above-described device employs a sliding structure not only between the torque plate 202 and the rotary lever 203 and between the rotary lever 203 and the piston 208, but also between the cylinder 207 and the piston 208 inside the spring 204a, to prevent the angular distortion of the spring 204a, therefore the hysteresis, that is, variation of the detected values between a pedal force measured when it is increasing and that measured when it is decreasing, will happen during operation, due to the sliding resistance in the sliding portions within the system. Besides, when the axis of the piston is inclined from the original position owing to the pressure of the rotary lever 203, smooth sliding movement between the piston 208 and the cylinder 207 is disturbed, thereby impairing assist feeling by the auxiliary drive force.

Accordingly, it is an objective of the present invention to provide an electric motor-assisted bicycle as indicated above which facilitates a reduction of the sizes and weight of the power unit and simultaneously avoids a variation of the detected values.

According to the present invention, this objective is solved for an electric motor-assisted bicycle as indicated above in that said power unit comprises a planetary gear mechanism such that the pedal force from the crankshaft is transmitted to one of the gears of said planetary gear mechanism, and that said pedal force sensor means comprises a reaction force receiving section for receiving a reaction force of another gear of said planetary gear mechanism and a rotation angle detection section, for detecting a rotation angle of said another gear, formed separate from the reaction force receiving section.

According to an advantageous embodiment of the present invention, the pedal force from the crankshaft is inputted to one of a planetary gear, a ring or internal gear, and a sun gear and outputted from either one of the remaining two gears.

According to an advantageous embodiment of the present invention, said angle detection section is arranged such that a rotary arm provided on said other gear is adapted to rotate a sensor shaft or force the same to retract in the axial direction, so as to detect the rotation angle or the amount of retraction.

Further, it is possible that said reaction force receiving section is arranged such that a rod member is inserted and held in either one of the free end and the fixed end of a coil spring, said rod having a diameter a little smaller than that of the coil spring and extending in the coil spring by a predetermined distance, and the free end of the coil spring is pressed by the pushing arm.

According to another advantageous embodiment of the present invention, said reaction force receiving section is arranged such that an push piece fitted in the free end of the coil spring is pivot-mounted to the pushing arm.

According to a still further embodiment of the present invention, a guide cylinder for holding the coil spring is disposed coaxially with said other of the free end and the fixed end of said coil spring and with a slight clearance between the outer surface of the guide cylinder and the inside of the coil spring.

Other preferred embodiments of the present invention are laid down in further dependent claims.

In the following, the present invention is explained in greater detail with respect to several embodiments thereof in conjunction with the accompanying drawings, wherein:
Fig. 1 is a left side view of an electric motor-assisted bicycle according to an embodiment of the invention of claim 1-3;
Fig. 2 is a left side view of the power unit of the electric motor-assisted bicycle;
Fig. 3 is a left side view of the power unit;
Fig. 4 is a plan view of the power unit;
Fig. 5 is a sectional bottom view of the power unit;
Fig. 6 is a side view partly in section of the power unit;
Fig. 7 is a perspective view of the pedal force detection device;
Fig. 8 is a side view partly in section showing the reaction force receiving section according to an embodiment of the invention of claim 5;
Fig. 9 is a side view showing the pedal force detection device according to an embodiment of the invention of claim 4;
Fig. 10 is a sectional plan view of the power unit of the embodiment;
Fig. 11 is a sectional view of the one-way clutch of the power unit;
Fig. 12 is a side view partly in section showing a conventional pedal force detection device;
Fig. 13 is a sectional view showing a variation of the reaction force receiving section of the embodiment;
Fig. 14 is an illustration showing a variation of the speed detecting section of the embodiment; and
Fig. 15 is an illustration showing another variation of the speed detecting section of the embodiment.

An embodiment of this invention will be described below with reference to the accompanying drawings.

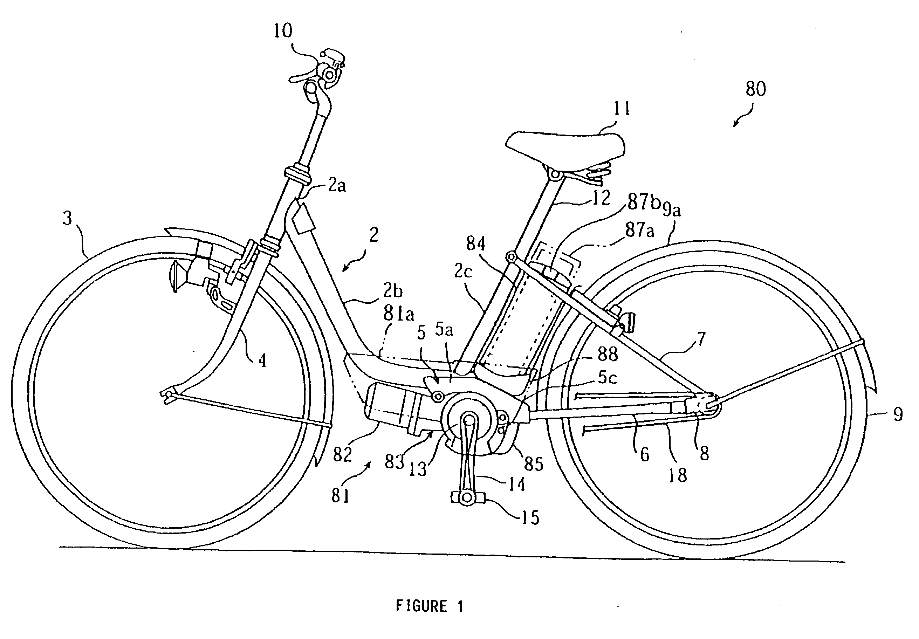

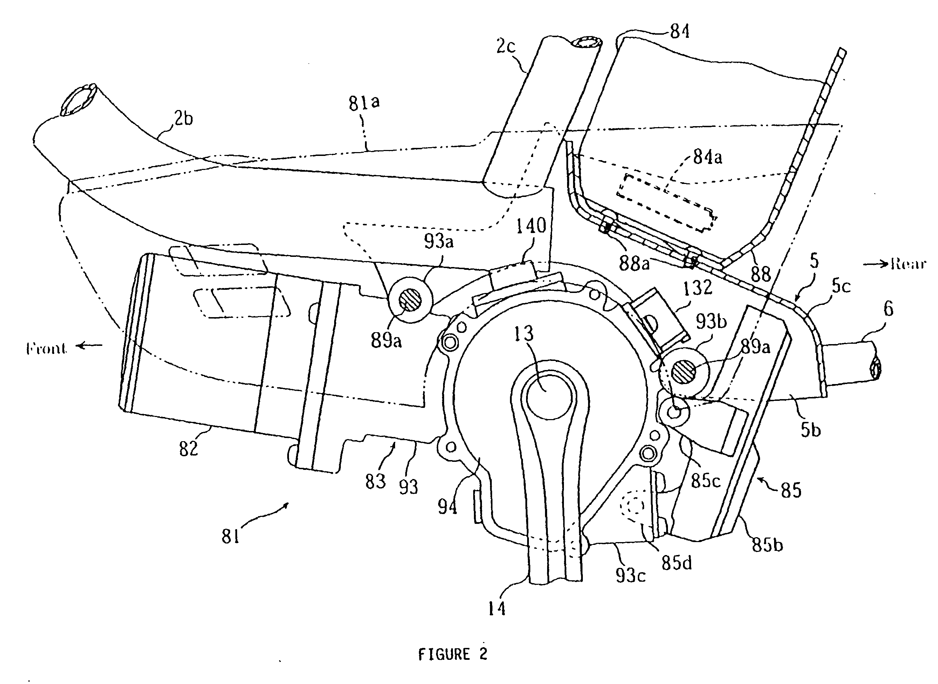

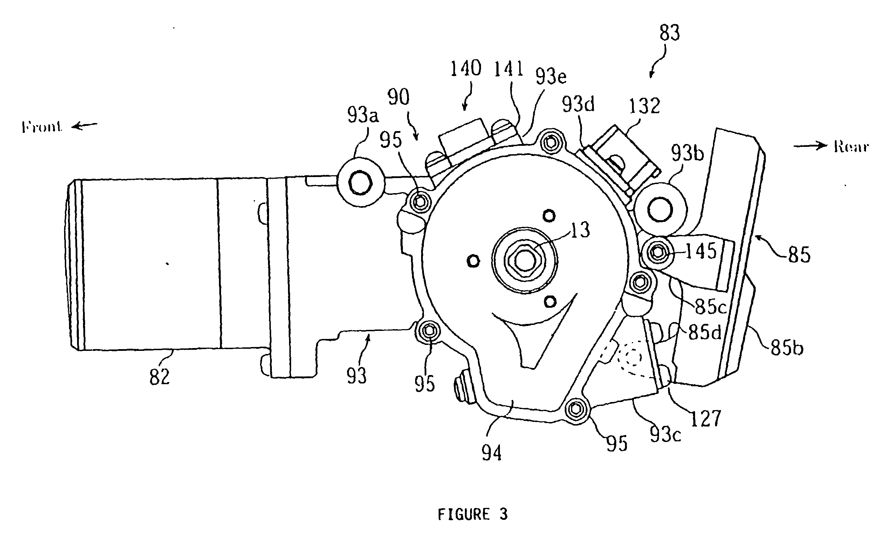

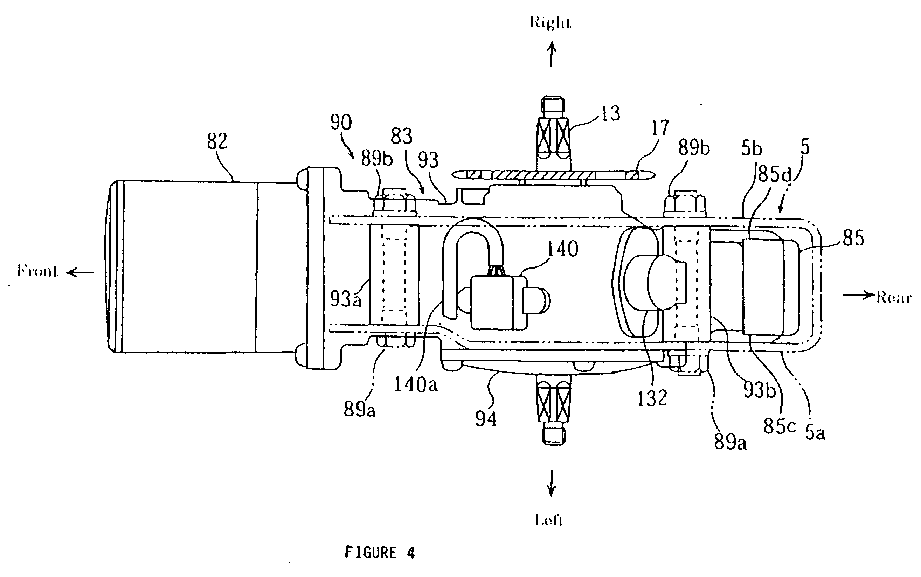

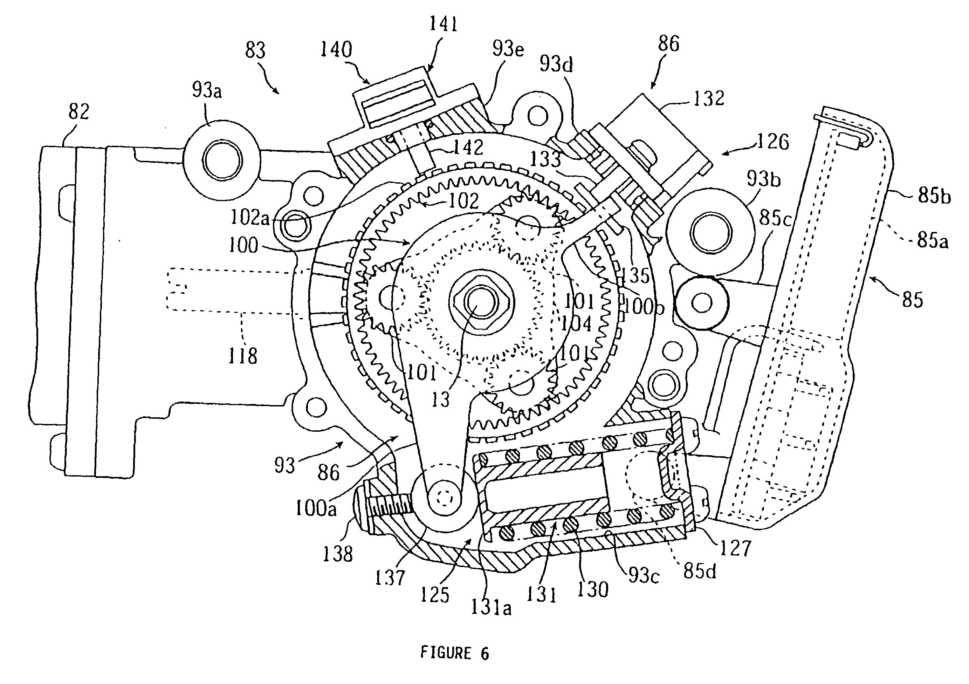

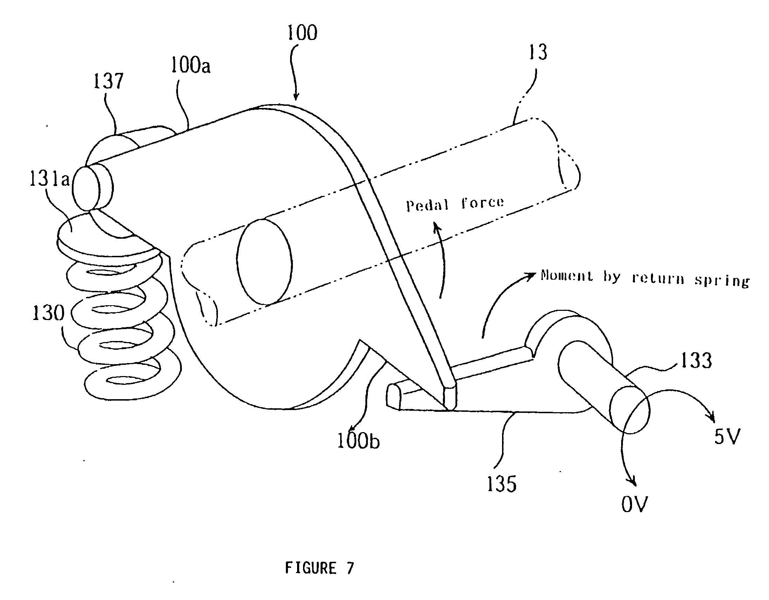

Fig. 1 through Fig.7 are views illustrating an electric motor-assisted bicycle according to an embodiment of this invention of claims 1-3; Fig. 1 is a left side view of the electric motor-assisted bicycle; Fig. 2 is a left side view of the auxiliary drive unit: Fig. 3 through Fig. 5 are a left side view, a plan view, and a sectional bottom view of the power unit, respectively; and Fig. 6 and Fig. 7 are a left side view and a structural illustration of the pedal force detection device, respectively. As used herein, the terms, "front and rear," and "right and left," mean front and rear, and right and left when viewed in the moving direction of the bicycle.

In the figure, numeral 80 designates an electric motor-assisted bicycle, a body frame 2 of which is arranged such that a head pipe 2a supporting, for rotation, a front fork 4 having a front wheel 3 supported thereon for revolution, a main tube 2b extending downwardly toward the rear from the head pipe 2a, and a seat tube 2c rising upwardly from the rear end of the main tube 2b, are joined together.

At the connection of the main tube 2b and the seat tube 2c is fixed a bracket 5 by welding. The bracket 5, of a shape of approximately an arc in profile and approximately a letter C in section and made of metal, is formed with right and left walls 5a, 5b covering the tube connection at the right and left sides, and with an upper wall 5c covering the space between the right and left walls at the rear and the top.

To the bracket 5 are connected the front ends of a pair of right and left chain stays 6 extending reawardly, and the rear ends of the chain stays 6 and the upper end of the seat tube 2c are connected by a pair of right and left seat stays 7. Each pair of the chain stays 6 and the seat stays 7 are joined together through a rear wheel bracket 8, on which is supported a rear wheel 9 for revolution. At the top of the front forks is mounted a handle 10, and in the top of the seat tube 2c is inserted, for height adjustment, a seat pillar tube 12 with a saddle 11 mounted thereon.

A drive unit 81 is supported by the mounting bracket 5 in suspended relation. The drive unit 81 is comprised of a man-powered drive mechanism for driving the rear wheel 9 for revolution through the pedal force inputted to a crankshaft 13, and an electric motor drive mechanism for driving the rear wheel 9 for revolution through the auxiliary drive force from an electric motor 82. The pedal force and the auxiliary drive force are transmitted to the rear wheel 9 after combined in a power unit 83.

The man-powered drive mechanism is arranged such that the crankshaft 13 is disposed. for rotation, in the power unit 83 fixed to the mounting bracket 5, so as to penetrate the same unit transversely; cranks 14 are fixed to the opposite ends of the crankshaft 13; pedals 15 are mounted to the ends of the cranks 14: and the pedal force inputted to the crankshaft 13 is transmitted from a planetary gear speed increasing mechanism 92 (described later) to the rear wheel 9 through a chain sprocket 17, chain 18, and free wheel (not shown).

The electric motor drive mechanism is comprised of the power unit 83 for outputting the resultant of the auxiliary force from the electric motor 82 and the pedal force, a battery 84 for supplying electric power to the electric motor 82, a control unit 85 for variably controlling the auxiliary force from the electric motor 82, and pedal force detection device 86 for detecting the pedal force.

The battery 84, of approximately a rectangular parallelepiped shape. contains a plurality of Ni-Cd battery cells. The battery 84 is disposed behind and along the seat tube 2c constituting the body frame 2, and inserted, at the bottom end, in a support box 88, of a bottomed cylindrical shape, fixed to the upper wall 5c of the mounting bracket 5 with bolts 88a. This insertion causes a discharging female terminal 84a at the bottom of the battery to be electrically connected to a discharging male terminal (not shown) on the support box 88. Also, the battery protrudes, at the top end, upwardly through the space between right and left seat stays 7 while surrounded by the seat stays 7, the seat tube 2c, and a rear fender 9a, thereby allowing its insertion and removal only in the vertical direction. To the head of the battery 84 are attached a grip 87a and a charging terminal 87b.

The power unit 83 is comprised of a planetary roller type speed reducing mechanism 91, a planetary gear type speed increasing mechanism 92, and a pedal force detection device 86, all contained in a unit case 90 of aluminum die casting. The unit case 90 is comprised of a case body 93 of approximately an bottomed cylindrical shape, and a cover member 94 for closing the opening formed in the left wall of the case body 93, the cover member 94 being fastened, with bolts 95, detachably to the case body 93.

On the front and rear portions of the upper wall of the case body 93 are formed integrally bosses 93a, 93b extending transversely, respectively. The case body 93 is fastened to the mounting bracket 5 with bolts 89a, with the bosses 93a, 93b positioned between the right and left walls 5a, 5b of the mounting bracket 5. To the flanged portion at the front opening of the case body 93 is bolted the flanged portion of the electric motor 82, and a rotary shaft 82a of the motor 82 is disposed in the direction vertical to the crankshaft 13.

In the unit case 90 is inserted the crankshaft 13 transversely with its ends protruding outwardly from the casing. The left end of the crankshaft 13 is supported, for rotation, by the boss section of a cover member 94 through a bearing 96. On the crankshaft 13 at the right end is fitted, through a bearing 97, a resultant force shaft 98 of approximately a cylindrical shape, for rotation relative thereto, and at the axially middle portion of the resultant force shaft 98 is formed integrally an output gear 98a of a large diameter. The resultant force shaft 98 is supported, for rotation, by the boss section of the case body 93 through a bearing 99, and the chain sprocket 17 is spline-fitted on the resultant force shaft 98 at the external end.

On the crankshaft 13 at the axially middle portion is fitted the above-mentioned planetary gear speed increasing mechanism 92, which is comprised of a sun gear 100 fitted, for rotation, on the crankshaft 13, three planetary gear 101 in engagement with the sun gear 100, for revolution thereround as well as for rotation about their axes, an internal gear 102 of approximately a bowl-like shape, in engagement with the planetary gears 101. The planetary gears 101 are supported, for rotation, on the carrier 104 fitted on the crankshaft 13 through an one-way clutch 103 for blocking transmission of the rotational force from the rear wheel to the crankshaft 13.

To the bottom wall of the internal gear 102 is fixed, with rivets, to an output gear 98a of the resultant force shaft 98. Thus, the pedal force inputted to the crankshaft 13 by human power is transmitted to the output gear 98a through the internal gear 102 of the planetary gear speed increasing mechanism 92, and further to the rear wheel 9 through the chain sprocket 17 and chain 18.

On the rotary shaft 82a (acting as a sun roller) of the electric motor 82 is mounted the planetary roller type speed reducing mechanism 91, which is comprised of an outer ring 110, of a cylindrical shape with a large diameter, fixed coaxially with the rotary shaft 82a, a plurality of planetary gears 111 disposed between the outer ring 110 and the rotary shaft 82 and in contact with both components 110, 82a, and pins 113 supporting the planetary gears 111 for rotation through bearings 112. On both end faces of the outer ring 110 are disposed guide plates 114, 115 for restricting axial movement of the rollers 111, and the guide plates 114, 115 are fastened to the flange of the motor 82 with bolts 116. The outside circumference of the outer ring 110 also serves as a guide section for the motor being fixed to the case body 93, providing higher accuracy of concentricity between the motor shaft and a gear member 118 (described later).

A carrier 117, of a bottomed cylindrical shape and having the pins planted therein, receives, in its axial center, the shaft section of the output gear member 118. The output gear member 118 is supported by the case body 93 for rotation through a bearing 119, and engaged with the output gear 98a of the resultant force shaft 98. The shaft section of the output gear member 118 and the carrier 117 are coupled to each other through an one-way clutch 120, which is adapted to avoid transmission of the pedal force to the motor 82 during running only by human power. As such, the drive force of the motor 82, while reducing its speed through the planetary roller type speed reducing mechanism 91, is transmitted from the carrier 117 to the resultant force shaft 98 through the output gear member 118, and further to the rear wheel 9 after combined with the pedal force from the crankshaft 13 at the resultant force shaft 98.

In the case body 93 is provided the pedal force detection device 86, which is, as shown in Fig. 6 and Fig. 7, comprised of a reaction force receiving section 125 disposed at the bottom of the case body 93, and an angle detection section 126 disposed at the rear of the upper wall of the case body 93, both components 125, 126 being located separately along the outer surface of the case body 93.

The reaction force receiving section 125 is arranged such that a support plate 127 is bolted to the opening of a receiving portion 93c formed in the bottom wall of the case body 93, a coil spring 130 is disposed inside the receiving portion 93c, and a cylindrical rod member 131 (rod body) having a flange 131a formed integrally therewith, is inserted in the free end of the coil spring 130 which is held between the flange 131a and the support plate 127. The rod member 131 is in sliding contact with the coil spring with a small clearance and extends approximately to the middle of the coil spring.

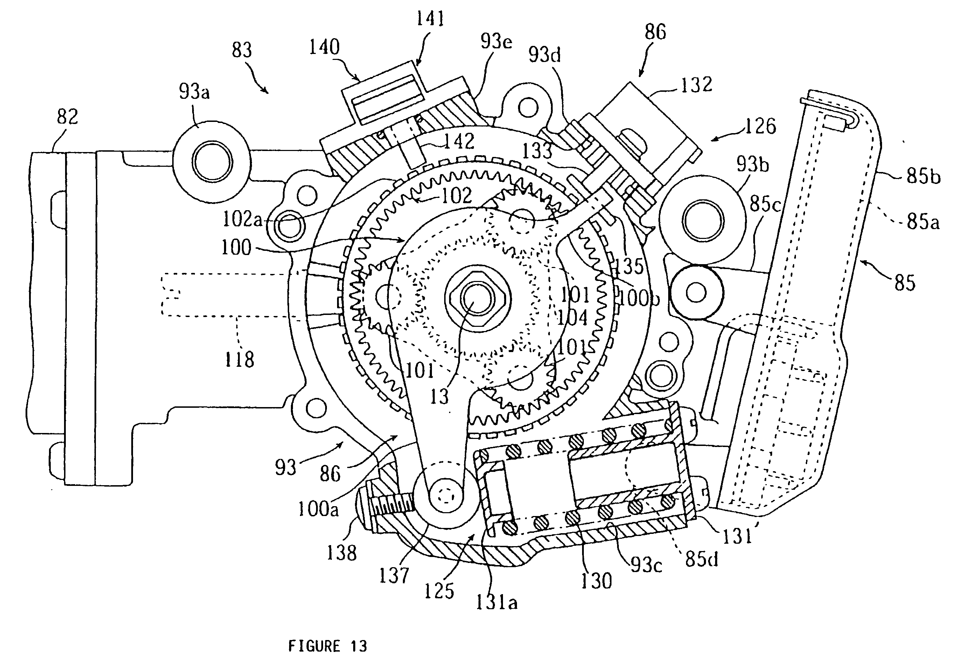

The angle detection section 126 has a structure in which a potentiometer 132 is bolted to a mounting seat 93d formed on the upper wall of the case body 93. An sensor shaft 133 of the potentiometer 132 is disposed in the direction vertical to the crankshaft 13, protruding into the case body 93. To the tip of the sensor shaft 133 is fixed a rotary lever 135, which is biased, by a spring (not shown), clockwise when viewed from the sensor shaft side (see Fig. 13).

The sun gear 100 is formed, integrally, with a pushing arm 100a and a rotary arm 100b both spaced from each other circumferentially. On one end of the pushing arm 100a is shaft-mounted a roller 137, which is in rolling contact with the end face of the flange 131a of the rod member 131. The roller 137 also engages the stopper bolt 138, for use in zero point adjustment, screwed in the case body 93 for advancing and retracting movement, thereby restricting the clockwise rotational movement of the pushing arm 100a. The rotary arm 100b is in contact with the rotary lever 135 of the sensor shaft 133.

The sun gear 100 rotates to an angular position where the pedal force inputted to the crankshaft 13 and the biasing force of the coil spring 130 are balanced, causing the rotation of the rotary arm 100b. This rotational movement causes the sensor shaft 133 to rotate through rotary lever 135; the rotation angle of the sensor shaft 133 is detected by the potentiometer 132; and the detected value is outputted to the control unit 85 over a lead wire (not shown).

At the front of the upper wall of the case body 93 is disposed a speed sensor 140, which is arranged such that a sensor body 131 is bolted to a mounting seat 93e of the case body 93, with a detection section 142 of the sensor body 141 protruded into the case body 93. The detection section 142 is disposed facing, with a slight clearance, to a tooth section 102a formed on the outside circumference of the internal gear 102 in a given pitch. The speed sensor 140 is adapted to detect changes in the magnetic resistance of the tooth section 102a in association with the rotation of the internal gear 102, and to output the detected values to the control unit 85 over a lead wire 140a. The tooth section 102a is formed at the same occasion when the gear teeth of the internal gear 102 are formed by forging.

The control unit 85 is comprised of a unit body 85a and a control box 85b for housing the unit body, and the control box 85b is disposed on the rear wall surface of the case body 93. The control box 85b is formed, integrally, with mounting pieces 85c, 85d, which are fastened, with bolts 145, to the bosses formed on the case body 93.

The upper half of the control unit 85, the potentiometer 132, and the speed sensor 140 are located inside the mounting bracket 5 and surrounded by the right and left walls 5a, 5b, and the upper wall 5c of the bracket 5.

The control unit 85 is arranged so as to determine the magnitude of the pedal force applied to the pedal 15, from the detected value of the potentiometer 132, to read the vehicle speed from the speed sensor 140, to calculate the magnitude of the auxiliary drive force based on a built-in auxiliary drive force control map, and to supply an electric current corresponding to the auxiliary drive force from the battery 84 to the electric motor 82. The auxiliary drive force is set such that the ratio of the auxiliary force to the pedal force applied by the rider will be nearly one to one for the vehicle speed in the range of 0 to 15 Km/h, decreased gradually for the vehicle speed over 15 km/h, and reduced to zero when the vehicle speed reaches 24 Km/h.

Now, functions and effects of this embodiment will be described.

According to this embodiment, the pushing arm 100a and the rotary arm 100b are formed integral with the sun gear 100 with an angular distance, and the reaction receiving section 125 with a coil spring receiving the reaction force on the pushing arm 100a, is disposed separate circumferentially from the sensor shaft 133 adapted to be rotated through the rotary arm 100b. Therefore, only the rotational force of the rotary arm 100b will act on the sensor shaft 133.

As such, no significant load acts on the sensor shaft 133 for inputting the rotation angle to the potentiometer, so that the sensor shaft 133 can be made small in diameter compared with the conventional system of the same shaft being subjected to both the pedal force and the reaction force, and the related shaft-supporting structure can be simplified, thereby effecting cost reduction as well as weight saving.

In addition, the rod member 131, with a diameter a little smaller than the inside diameter of the coil spring, having a flange 131a formed thereon and extending approximately to the middle of the coil spring, is inserted in the free end of the coil spring 130, and the flange 131a is adapted to be pressed by the pushing arm 100a. Therefore, sliding resistance can be decreased compared with the system shown in Fig. 12 in which the cylinder and the piston is adapted to move in a sliding relation while the angular distortion of the coil spring is restricted, and variation of the detected values can be avoided by preventing the hysteresis which is considered as being induced by the sliding resistance.

Unlike the conventional cylinder-piston type sliding system, rough sliding movement due to the angular distortion of the piston axis caused by the pushing force of the rotary lever 203, is avoided, and smooth detecting operation can be obtained with improved assist feeling by the auxiliary driving force. In addition, the flange 131a is in rolling contact with the roller 137, so that smoother detection operation is ensured compared with the system of the pushing arm being in a sliding contact with the piston flange, as well as smaller angular distortion of the coil spring.

The reaction force receiving section 125 and the angle detection section 126 are formed separately, so that the dimension of the protrusion of the receiving portion 93c of the body case 93 for housing the reaction force receiving section 125, can be decreased, thereby effecting smaller-sized case as a whole and improving the degree of freedom for the layout of the power unit 83 mounted on the vehicle.

The control unit 85, the potentiometer 132, and the speed sensor 140 are disposed along the outer surface of the unit case 83 and fixed to the same, so that assembling man hour as well as the number of parts can be reduced, thereby effecting cost reduction. In addition, wiring around the control unit 85 can he simplified, the degree of freedom can be improved for the layout in mounting these components on the vehicle, and the vehicle body can be made smaller in size as a whole.

Further, the upper half of the control unit 85, the potentiometer 132, and the speed sensor 140 are located inside the mounting bracket 5 and covered by the same, so that damage due to the flying stones etc can be prevented and the vacant space between the case body 93 and the bracket 5 can be made effective use, thereby effecting a smaller-sized product.

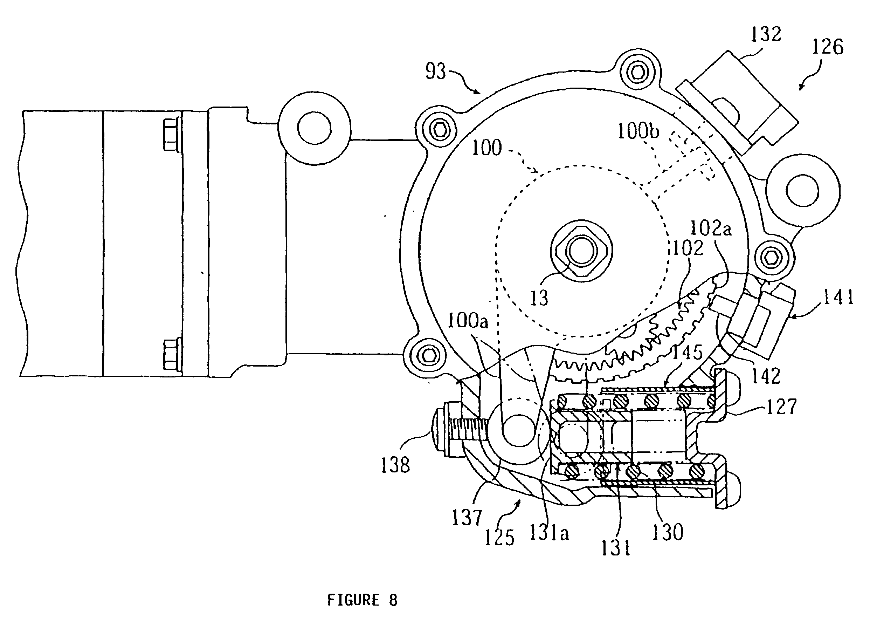

In the embodiment described above, an example is explained for the reaction force receiving section, in which the rod member 131 is inserted in the free end of the coil spring 130, but an alternative design can be adopted in which, as shown in Fig. 8, a guide cylinder 145 is fitted over a coil spring 130 with a slight clearance, and the guide cylinder is fixed to a support plate 127. In this case, with relatively large clearance between the coil spring 130 and the rod member 131, angular distortion of the coil spring 130 can be avoided more reliably and sliding resistance can be kept small, thereby improving the operational reliability and durability of the reaction force receiving section 125.

Also, the rod member 131 can be provided in the fixed end of the coil spring 130, as a rod member 131' shown in Fig. 13. In this case, a pushing piece 131a is provided in the free end of the coil spring 130. Thus, this system is able to prevent angular distortion of the coil spring 130 more reliably.

Also, in this embodiment, the speed sensor 140 is disposed at the front of the upper wall of the case body 93, but the location of the speed sensor is not limited to this particular example, and it can be disposed, for example, between the reaction force receiving section 125 on the rear wall of the case body 93 and the angle detection section 126, as shown in Fig. 8.

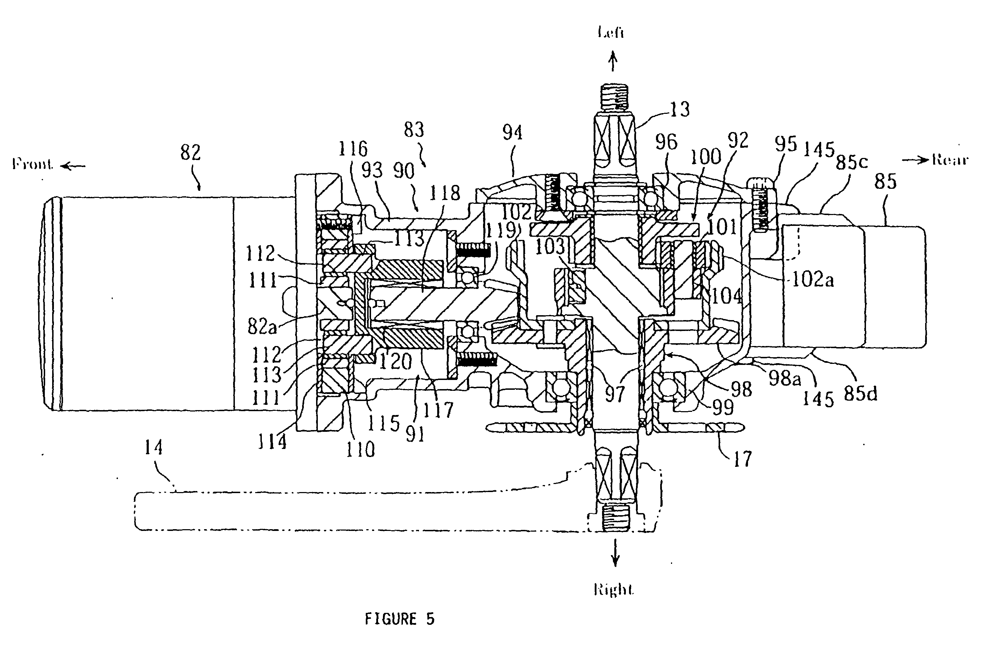

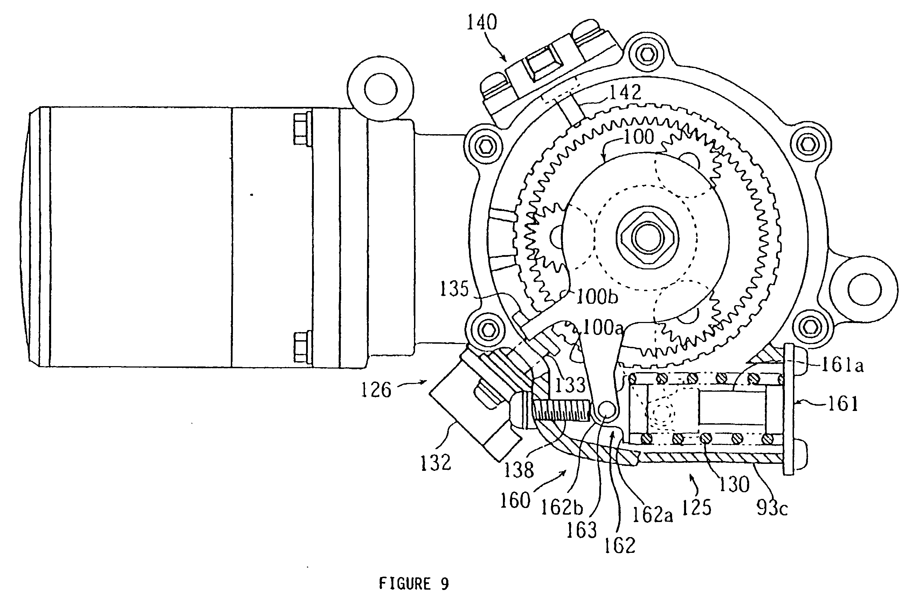

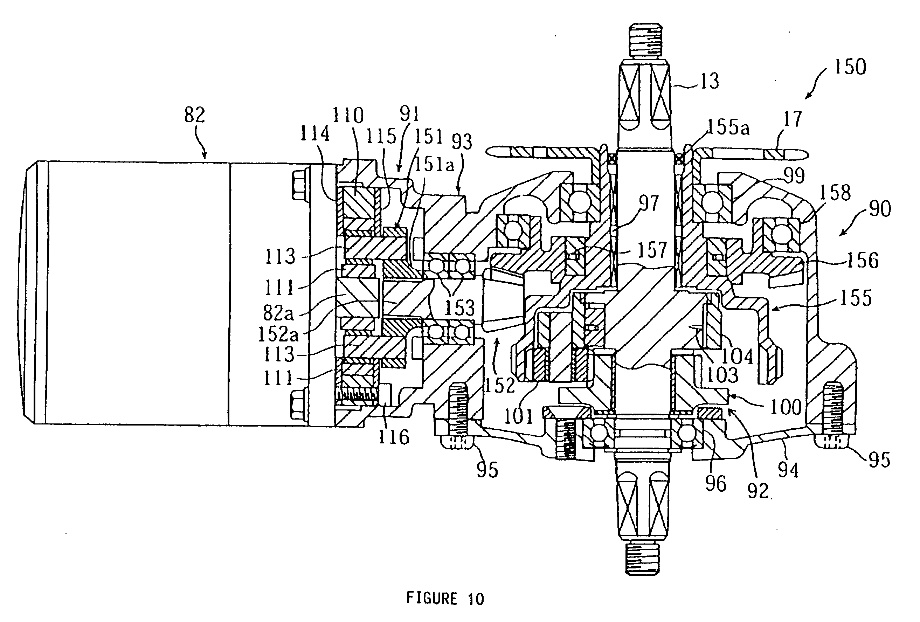

Fig. 9 through Fig. 11 are views illustrating a pedal force detection device according to an embodiment of the invention and reference numerals the same as those shown in Fig. 5 and Fig. 6 represent the same or the equivalent parts.

The power unit 150 of this embodiment is comprised of a planetary roller speed decreasing mechanism 91, a planetary gear speed increasing mechanism 92, and pedal force detection device 160, all contained in the unit case 90. The fundamental structure is similar to that of the previous embodiment, thus only distinctive features are described.

Pins 113 supporting planetary gears 111 constituting the planetary roller speed decreasing mechanism 91, are fixed to a carrier 151 of a disklike shape. In a boss section 151a of the carrier 151 is spline-fitted a shaft section 152a of an output gear 152, and the shaft section 152a is supported by the case body 93 through a pair of bearings 152, 153.

Planetary gears 101 constituting the planetary gear speed increasing mechanism 92 are engaged with an internal gear 155, and at the base of the external gear 155 is formed integrally a cylindrical resultant force shaft 155a, which is supported by the crankshaft 13 and the case body 93, for rotation relative thereto, through bearings 97, 99.

On the outside circumference of the resultant force shaft 155a is mounted an output gear 156, which is engaged with the output gear 152. This output gear 156 is supported by the case 93 through a bearing 158.

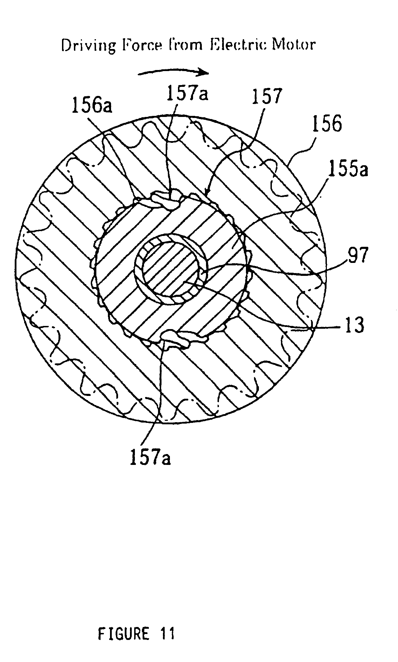

The output gear 156 and the resultant force shaft 155a are coupled together through a pawl type one-way clutch 157. The one-way clutch 157, as shown in Fig. 11, is arranged such that pawls 157a are provided between the resultant force gear 155a and the output gear 156, and biasing springs (not shown) are adapted to bias the pawls 157a against engage gear teeth 156a formed in the inside circumference of the output gear 156. thereby preventing transmission of the pedal force from the output gear 156 to the motor 82 side, during running only by human power.

The pedal force detection device 160 is comprised of a reaction force receiving section 125 disposed in the bottom wall of the case body 93, and an angle detection section 126 disposed at the front separately from the angle detection section 125, the fundamental structure of which is similar to that of the previous embodiment.

The reaction force receiving section 125 is arranged such that a support plate 161 supporting the fixed end of a coil spring 130 is formed, integrally, with a cylindrical stopper 161a, the push piece 162 fitted in the free end of the coil spring 130 is formed, integrally, with a flange 162a, and the flange 162a is formed, integrally, with a connection section 162b. To the connection section 162b is connected, through a pin 163, a pushing arm 100a of a sun gear 100 in engagement with the planetary gears 101, that is, the pushing arm 100a and the push piece 162 are pivoted to each other. At the base of the pushing arm 100a is formed a rotary arm 100b such that the pushing arm 100a and the rotary arm 100b takes the shape of a letter L, and the rotary arm 100b is in contact with a rotary lever 135 of a sensor shaft 133, as is similar to the system shown in Fig. 6 and Fig. 7.

In this embodiment, the pushing arm 100a, and the push piece 162 fitted in the free end of the coil spring 130, are connected for rotation through the pin 163, so that without sliding resistance, the angular distortion of the coil spring 130 can be prevented more reliably compared with the above-described system of the roller being in rolling contact, thereby effecting further improvement in the reliability and durability.

In this embodiment, the output gear 156 receiving the driving force of the motor 82, and the resultant force shaft 155a for outputting the resultant of the driving force of the motor and the man-powered pedal force, are coupled through the one-way clutch 157, so that no pedal force is transmitted to the output gear 156 during running by human power, thereby avoiding noises generated when the output gears 156 and 152 are revolving in a engaged relation.

In addition, the one-way clutch 157 is disposed on the resultant force shaft side, so that the longitudinal dimension of the output gear 152 can be decreased compared with the case when the one-way clutch is disposed on the output gear 152 side and thus the entire length of the power unit 150 can be reduced as much, thereby effecting a smaller-sized product. In other words, as shown in Fig. 5, if a needle type one-way clutch is disposed between the output gear and the carrier, the structure requires a long shaft of the output gear, posing a problem of a larger product.

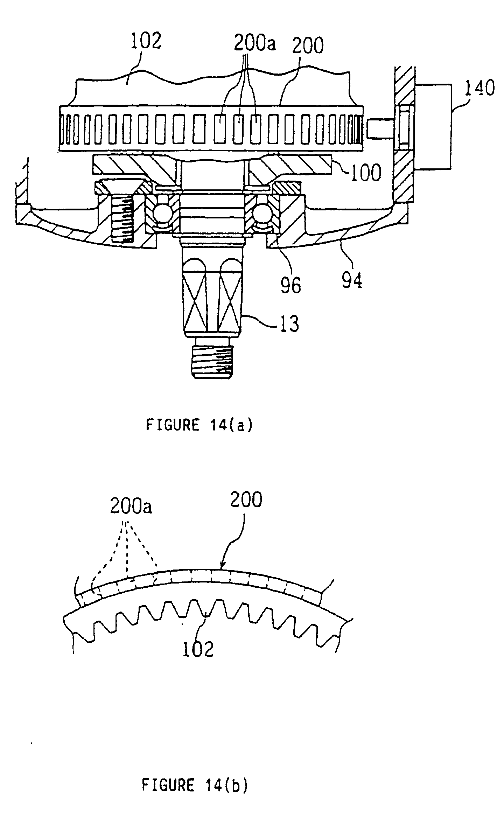

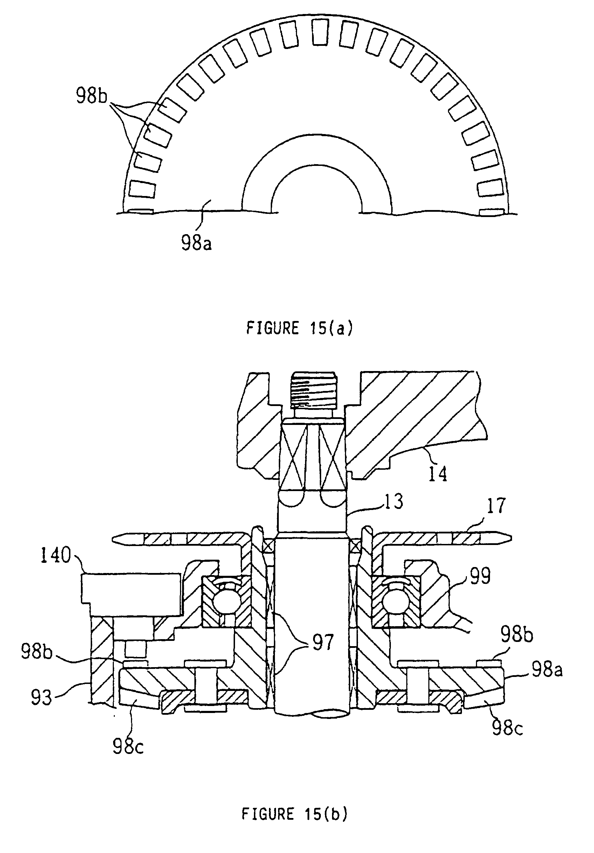

In the embodiment described above, a system is employed for a device for detecting vehicle speed, in which teeth (projections) 102a are formed on the outside circumference of the external gear (ring gear) 102 in a given pitch, and changes in the magnetic resistance caused by the teeth 108a are detected by the speed sensor 140, but alternative systems can be adopted for this speed detection device, as shown in Fig. 14 or Fig. 15.

The system shown in Fig 14 is an example in which a metal band is formed into a ring 200 after being formed with holes 200a of a regular pitch, for example by press forming, and the ring 200 is mounted on the outside circumference of the external gear 102 with an interference fit, changes in the magnetic resistance caused by the holes 200a being detected by the speed sensor 140.

In this case, the ring 200 is fixed additionally to the outside circumference of the external gear 102, so that the influence on the accuracy of the pitch etc of the teeth formed on the inside circumference is small compared with the case when teeth (projections) 102a are formed by cold forging or machining. The pitch of the holes 200a can be selected as required.

The system shown in FIg. 15, is another example, in which projections 98b are formed, in a given pitch, on the backside of an output gear (bevel gear) 98a, and changes in the magnetic resistance caused by the projections 98b are detected by the speed sensor 140. The projections 98ba are formed at the same occasion when the teeth 98c are formed by forging.

In this case, the projections 98b are formed at the same time when the teeth 98c are formed, so that increase of the number of parts and machining time can be avoided. The backside surface of the output gear (bevel gear) in this embodiment is flat, so that the shape of the projections 98b can be formed precise, thereby improving accuracy of the speed detection.

According to an embodiment of the invention, the pedal force sensor is arranged such that a reaction force receiving section and an angle detection section are formed separately, and according to another embodiment of the invention, an a angle detection section is arranged such that input and output gears is adapted to rotate a sensor shaft. Therefore, no significant load acts on the rotary shaft of the angle detection section, so that the rotary shaft can be made small in diameter compared with the conventional system of the same shaft being subjected to the pedal force and its reaction force, and the related shaft-supporting structure can be simplified such that the rotary shaft can be supported by single-end-support system, thereby effecting cost reduction and weight saving.

According to a further embodiment of the invention, the reaction force receiving section is arranged such that a rod body is inserted in a coil spring, and a pushing arm is adapted to push a flange formed on the rod body. Therefore, no significant sliding resistance is recognized compared with the conventional cylinder-piston type sliding system, so that variation of the detected values between a pedal force measured when it is increasing and that measured when it is decreasing, that is, the hysteresis which is considered as being induced by the sliding resistance, can be prevented, thereby improving assist feeling without sticking due to the sliding resistance.

According to a still further embodiment of the invention, the rod body and the pushing arm are connected through a pin, so that angular distortion of the coil spring can be prevented, thereby improving the reliability and durability for a long-term use.

According to another embodiment of the invention,a guide cylinder is fitted over the coil spring, so that the sliding resistance between the rod body and the coil spring is kept small, while angular distortion of the coil spring can be prevented reliably, thereby improving the reliability and durability for a long-term use further.

## Claims

1. An electric motor-assisted bicycle (80) comprising a power unit (83) for outputting a pedal force inputted to a crankshaft (13) and/or an auxiliary force from an electric motor (82), a pedal force sensor means (86;126) for detecting said pedal force, and a control unit (85) for variably controlling the auxiliary force from said electric motor (82) according to the pedal force detected by the pedal force sensor means (86;126), **characterized in that** said power unit (83) comprises a planetary gear mechanism (92) such that the pedal force from the crankshaft (13) is transmitted to one of the gears of said planetary gear mechanism (92), and that said pedal force sensor means (86;160) comprises a reaction force receiving section (125) for receiving a reaction force of another gear (100) of said planetary gear mechanism (92) and a rotation angle detection section (126), for detecting a rotation angle of said another gear (100), formed separate from the reaction force receiving section (125).

2. An electric motor-assisted bicycle according to claim 1, **characterized in that** the pedal force from the crankshaft (13) is inputted to one of a planetary gear (101), a ring or internal gear (102), and a sun gear (100) and outputted from either one of the remaining two gears.

3. An electric motor-assisted bicycle according to claim 1 or 2, **characterized in that** said reaction force receiving section (125) being arranged such that a pushing arm (100a) provided on the other of the remaining or two gears is adapted to push a biasing spring (130) receiving the reaction force acting on said other gear, and that said angle detection section (126) detecting rotation angle of said other gear.

4. An electric motor-assisted bicycle according to at lest one of the preceding claims 1 to 3, **characterized in that** said angle detection section (126) being formed separate from said reaction force receiving section (125).

5. An electric motor-assisted bicycle according to at least one of the preceding claims 1 to 4, **characterized in that** said angle detection section (126) is arranged such that a rotary arm (100b) provided on said other gear is adapted to rotate a sensor shaft (133) or force the same to retract in the axial direction, so as to detect the rotation angle or the amount of retraction.

6. An electric motor-assisted bicycle according to at least one of the preceding claims 1 to 5, **characterized in that** said reaction force receiving section (125) is arranged such that a rod member (131;131') is inserted and held in either one of the free end and the fixed end of said biasing spring (130), said rod member (131') having a diameter a little smaller than that of the biasing spring (130) and extending in the biasing spring (130) by a predetermined distance, and the free end of the biasing spring (130) is pressed by the pushing arm (100a).

7. An electric motor-assisted bicycle according to at least one of the preceding claims 1 to 5, **characterized in that** said reaction force receiving section (125) is arranged such that a push piece (131a) fitted in the free end of the biasing spring (130) is pivotally-mounted to the pushing arm (100a).

8. An electric motor-assisted bicycle according to at least one of the preceding claims 1 to 6, **characterized in that** guide cylinder (131a) for holding the biasing spring (130) is disposed coaxially with said other of the free end and the fixed end of said biasing spring (130) and with a slight clearance between the outer surface of the guide cylinder (131a) and the inside of the biasing spring (130).

9. An electric motor-assisted bicycle according to claim 6, **characterized in that** a guide cylinder (145) for holding the biasing spring (130) is coaxially fitted over said biasing spring (130) with a slight clearance between the inner surface of said guide cylinder (145) and the outside of said biasing spring (130).

10. An electric motor-assisted bicycle according to at least one of the preceding claims 1 to 9, **characterized in that** said biasing spring is a coil spring (130).

11. An electric motor-assisted bicycle according to at least one of the preceding claims 1 to 10, **characterized in that** said control unit (85) being fastened to the outer surface of a unit case (90) accommodating said power unit (83).

12. An electric motor-assisted bicycle according to at least one of the preceding claims 1 to 11, **characterized in that** said control unit (85) and/or said pedal force sensor (86;126) and/or a speed sensor (140) are detachably mounted to a unit case (90) accommodating said power unit (83).

13. An electric motor-assisted bicycle according to at least one of the preceding claims 1 to 12, **characterized in that** said control unit (85) is adapted to calculate the magnitude of the auxiliary drive force according to an auxiliary drive force control map.

14. An electric motor-assisted bicycle according to at least one of the preceding claims 1 to 13, **characterized in that** said control unit (85) is adapted to set said auxiliary drive force such that a ratio of the auxiliary drive force to the pedal force exerted a rider is nearly one to one for a vehicle speed in a range of 0 to 15 km/h, decreases gradually for the vehicle speed of above 15 km/h and is reduced to zero when the vehicle speed reaches 24 km/h.

## Patentansprüche

1. Elektromotor- unterstütztes Fahrrad (80), mit einer Antriebseinheit (83) zum Ausgeben einer Pedalkraft, eingegeben auf eine Kurbelwelle (13) und / oder einer Hilfskraft von einem Elektromotor (82), einer Pedalkraft- Sensoreinrichtung (86; 126) zum Erfassen der Pedalkraft, und einer Steuereinheit (85) zum veränderbaren Steuern der Hilfskraft von dem Elektromotor (82) entsprechend der durch die Pedalkraft- Sensoreinrichtung (86; 126) erfaßten Pedalkraft, **dadurch gekennzeichnet, daß** die Antriebseinheit (83) eine Planetengetriebevorrichtung (92) aufweist, derart, daß die Pedalkraft von der Kurbelwelle (13) zu einem der Zahnräder der Planetengetriebevorrichtung (92) übertragen wird, und daß die Pedalkraft- Sensoreinrichtung (86; 126) einen Reaktionskraft- Aufnahmeabschnitt (125) zum Aufnehmen einer Reaktionskraft eines weiteren Zahnrades (100) der Planetengetriebevorrichtung (92) und einen Drehwinkel- Erfassungsabschnitt (126), zum Erfassen eines Drehwinkels des weiteren Zahnrades (100) aufweist, getrennt gebildet von dem Reaktionskraft- Aufnahmeabschnitt (125).

2. Elektromotor- unterstütztes Fahrrad nach Anspruch 1, **dadurch gekennzeichnet, daß** die Pedalkraft von der Kurbelwelle (13) auf eines der Planetenzahnräder (101), auf ein Ring- oder Innenzahnrad (102) und auf ein Sonnenrad (100) eingegeben und von einem der verbleibenden zwei Zahnräder ausgegeben wird.

3. Elektromotor- unterstütztes Fahrrad nach Anspruch 1 oder 2, **dadurch gekennzeichnet, daß** ein Reaktionskraft- Aufnahmeabschnitt (125) derart angeordnet ist, daß ein Druckarm (100a), vorgesehen an dem anderen des verbleibenden der zwei Zahnrädern, vorgesehen ist, um eine Vorspannfeder (130), die die Reaktionskraft, die auf das andere Zahnrad wirkt, aufnimmt, zu drücken und daß der Winkel- Erfassungsabschnitt (126) den Drehwinkel des anderen Zahnrades erfaßt,

4. Elektromotor- unterstütztes Fahrrad nach zumindest einem der vorhergehenden Ansprüche 1 bis 3, **dadurch gekennzeichnet, daß** der Winkel- Erfassungsabschnitt (126) von dem Reaktionskraft- Aufnahmeabschnitt (125) getrennt gebildet ist.

5. Elektromotor- unterstütztes Fahrrad nach zumindest einem der vorhergehenden Ansprüche 1 bis 4, **dadurch gekennzeichnet, daß** der Winkel- Erfassungsabschnitt (126) so angeordnet ist, daß ein Dreharm (100b), vorgesehen an dem anderen Zahnrad, vorgesehen ist, um eine Sensorwelle (133) zu drehen oder dieselbe zu drücken, um in der axialen Richtung zurückzuziehen, um so den Drehwinkel oder den Betrag des Zurückziehens zu erfassen.

6. Elektromotor- unterstütztes Fahrrad nach zumindest einem der vorhergehenden Ansprüche 1 bis 4, **dadurch gekennzeichnet, daß** der Reaktionskraft- Aufnahmeabschnitt (125) so angeordnet ist, daß ein Stangenteil (131, 131') in einem, dem freien Ende oder dem festen Ende der Vorspannfeder (130) eingesetzt und gehalten wird, wobei das Stangenteil (131') einen Durchmesser ein wenig kleiner als derjenige der Vorspannfeder (130) hat, und sich in die Vorspannfeder (130) um einen vorgegebenen Weg erstreckt, und das freie Ende der Vorspannfeder (130) durch den Druckarm (100a) gedrückt wird.

7. Elektromotor- unterstütztes Fahrrad nach zumindest einem der vorhergehenden Ansprüche 1 bis 5, **dadurch gekennzeichnet, daß** der Reaktionskraft- Aufnahmeabschnitt (125) so angeordnet ist, daß ein Druckstück (131a), eingesetzt in das freie Ende der Vorspannfeder (130), schwenkbar an dem Druckarm (100a) montiert ist.

8. Elektromotor- unterstütztes Fahrrad nach zumindest einem der vorhergehenden Ansprüche 1 bis 6, **dadurch gekennzeichnet, daß** ein Führungszylinder (131a) zum Halten der Vorspannfeder (130) koaxial mit dem anderen des freien Endes oder des festen Endes der Vorspannfeder (130) und mit leichtem Abstand zwischen der Außenoberfläche des Führungszylinders (131a) und der Innenseite der Vorspannfeder (130) vorgesehen ist.

9. Elektromotor- unterstütztes Fahrrad nach Anspruch 6, **dadurch gekennzeichnet, daß** ein Führungszylinder (145) zum Halten der Vorspannfeder (130) koaxial über die Vorspannfeder (130) mit einem leichtem Abstand zwischen der Innenoberfläche des Führungszylinders (145) und der Außenseite der Vorspannfeder (130) eingesetzt ist.

10. Elektromotor- unterstütztes Fahrrad nach zumindest einem der vorhergehenden Ansprüche 1 bis 9, **dadurch gekennzeichnet, daß** die Vorspannfeder eine Schraubenfeder (130) ist.

11. Elektromotor- unterstütztes Fahrrad nach zumindest einem der vorhergehenden Ansprüche 1 bis 10, **dadurch gekennzeichnet, daß** die Steuereinheit (85) an der Außenoberfläche einer Gehäuseeinheit (90), das die Antriebseinheit (83) aufnimmt, befestigt ist.

12. Elektromotor- unterstütztes Fahrrad nach zumindest einem der vorhergehenden Ansprüche 1 bis 11, **dadurch gekennzeichnet, daß** die Steuereinheit (85) und / oder der Pedalkraft- Sensor (86; 126) und / oder ein Geschwindigkeitssensor (140) lösbar auf einer Gehäuseeinheit (90), das die Antriebseinheit (83) aufnimmt, montiert ist.

13. Elektromotor- unterstütztes Fahrrad nach zumindest einem der vorhergehenden Ansprüche 1 bis 12, **dadurch gekennzeichnet, daß** die Steuereinheit (85) vorgesehen ist, um die Größe der Hilfsantriebskraft entsprechend eines Hilfsantriebskraft- Steuerplanes zu berechnen.

14. Elektromotor- unterstütztes Fahrrad nach zumindest einem der vorhergehenden Ansprüche 1 bis 13, **dadurch gekennzeichnet, daß** die Steuereinheit (85) vorgesehen ist, die Hilfskraft so festzulegen, daß ein Verhältnis der Hilfsantriebskraft zu von einer von einem Fahrer ausgeübten Pedalkraft nahezu eins zu eins ist, für eine Fahrzeuggeschwindigkeit in einem Bereich von 0 bis 15 km/h, für eine Fahrzeuggeschwindigkeit über 15 km/h allmählich abnimmt und auf Null vermindert wird, wenn die Fahrzeuggeschwindigkeit 24 km/h erreicht.

## Revendications

1. Bicyclette à assistance électrique (80) comprenant un ensemble propulseur (83) destiné à sortir une force de pédalage appliquée à un axe de pédalier (13) et / ou une force auxiliaire en provenance d'un moteur électrique (82), des moyens de détection de force de pédalage (86 ; 126) destinés à détecter ladite force de pédalage, et une unité de commande (85) destinée à commander de manière variable la force auxiliaire en provenance dudit moteur électrique (82) en fonction de la force de pédalage détectée par les moyens de détection de force de pédalage (86 ; 126), **caractérisée en ce que** ledit ensemble propulseur (83) comprend un mécanisme à train planétaire (92) de sorte que la force de pédalage en provenance de l'axe de pédalier (13) est transmise à l'un des pignons dudit mécanisme à train planétaire (92), et **en ce que** lesdits moyens de détection de force de pédalage (86 ; 160) comprennent une section de réception de force de réaction (125) destinée à recevoir une force de réaction d'un autre pignon (100) dudit mécanisme à train planétaire (92) et une section de détection d'angle de rotation (126) destinée à détecter un angle de rotation dudit autre pignon (100), formée séparément de la section de réception de force de réaction (125).

2. Bicyclette à assistance électrique selon la revendication 1, **caractérisée en ce que** la force de pédalage en provenance de l'axe de pédalier (13) est appliquée à l'un des pignon planétaire (101), pignon ou couronne interne (102), et pignon solaire (100), et est sortie à partir de l'un quelconque des deux pignons restants.

3. Bicyclette à assistance électrique selon la revendication 1 ou la revendication 2, **caractérisée en ce que** ladite section de réception de force de réaction (125), qui est aménagée de telle sorte qu'un bras de poussée (100a) disposé sur l'autre des deux pignons restants, est adaptée pour pousser un ressort de décentrement (130) recevant la force de réaction qui agit sur ledit autre pignon, et **en ce que** ladite section de détection d'angle (126) détecte un angle de rotation dudit autre pignon.

4. Bicyclette à assistance électrique selon au moins l'une des revendications précédentes 1 à 3, **caractérisée en ce que** ladite section de détection d'angle (126) est formée séparément de ladite section de réception de force de réaction (125).

5. Bicyclette à assistance électrique selon au moins l'une des revendications précédentes 1 à 4, **caractérisée en ce que** ladite section de détection d'angle (126) est aménagée de telle sorte qu'un bras rotatif (100b) disposé sur ledit autre pignon est adapté pour faire tourner un axe de détection (133) ou pour forcer celui-ci à se rétracter dans le sens axial, de manière à détecter l'angle de rotation ou la valeur de rétraction.

6. Bicyclette à assistance électrique selon au moins l'une des revendications précédentes 1 à 5, **caractérisée en ce que** ladite section de réception de force de réaction (125) est aménagée de telle sorte qu'un élément de tige (131 ; 131') est introduit et maintenu dans l'une quelconque des extrémité libre et extrémité fixe dudit ressort de décentrement (130), ledit élément de tige (131') ayant un diamètre légèrement plus petit que celui du ressort de décentrement (130) et s'étendant dans le ressort de décentrement (130) sur une distance prédéterminée, et l'extrémité libre du ressort de décentrement (130) est poussée par le bras de poussée (100a).

7. Bicyclette à assistance électrique selon au moins l'une des revendications précédentes 1 à 5, **caractérisée en ce que** ladite section de réception de force de réaction (125) est aménagée de telle sorte qu'une pièce de poussée (131a) ajustée dans l'extrémité libre du ressort de décentrement (130) est montée en pivotement sur le bras de poussée (100a).

8. Bicyclette à assistance électrique selon au moins l'une des revendications précédentes 1 à 6, **caractérisée en ce qu'**un cylindre de guidage (131a) destiné à maintenir le ressort de décentrement (130) est disposé de manière coaxiale à ladite autre de l'extrémité libre et de l'extrémité fixe dudit ressort de décentrement (130) et avec un léger jeu entre la surface externe du cylindre de guidage (131a) et l'intérieur du ressort de décentrement (130).

9. Bicyclette à assistance électrique selon la revendication 6, **caractérisée en ce qu'**un cylindre de guidage (145) destiné à maintenir le ressort de décentrement (130) est ajusté de manière coaxiale sur ledit ressort de décentrement (130) avec un léger jeu entre la surface interne dudit cylindre de guidage (145) et l'extérieur dudit ressort de décentrement (130).

10. Bicyclette à assistance électrique selon au moins l'une des revendications précédentes 1 à 9, **caractérisée en ce que** ledit ressort de décentrement est un ressort à boudin (130).

11. Bicyclette à assistance électrique selon au moins l'une des revendications précédentes 1 à 10, **caractérisée en ce que** ladite unité de commande (85) est fixée sur la surface externe d'un carter (90) logeant ledit ensemble propulseur (83).

12. Bicyclette à assistance électrique selon au moins l'une des revendications précédentes 1 à 11, **caractérisée en ce que** ladite unité de commande (85) et / ou ledit détecteur de force de pédalage (86 ; 126) et / ou un détecteur de vitesse (140) sont montés de manière amovible sur un carter (90) logeant ledit ensemble propulseur (83).

13. Bicyclette à assistance électrique selon au moins l'une des revendications précédentes 1 à 12, **caractérisée en ce que** ladite unité de commande (85) est adaptée pour calculer l'amplitude de la force d'entraînement auxiliaire en fonction d'une table de commande de force d'entraînement auxiliaire.

14. Bicyclette à assistance électrique selon au moins l'une des revendications précédentes 1 à 13, **caractérisée en ce que** ladite unité de commande (85) est adaptée pour ajuster ladite force d'entraînement auxiliaire de sorte qu'un rapport entre la force d'entraînement auxiliaire et la force de pédalage exercée par un cycliste est pratiquement égal à un sur un pour une vitesse de véhicule située dans une plage de 0 à 15 km/h, diminue progressivement pour une vitesse de véhicule située au dessus de 15 km/h, et est ramené à zéro lorsque le véhicule atteint la vitesse de 24 km/h.
